# EUROPEAN PATENT SPECIFICATION

(11) **EP 4 439 912 B1**
(45) Date of publication and mention of the grant of the patent: **14.01.2026**
(21) Application number: 22940565.9
(22) Date of filing: 05.05.2022
(51) Int. Cl.: H02J 7/00, H01M 10/42, H04Q 9/00

(54) **COMMUNICATION METHOD FOR ENERGY STORAGE SYSTEM, AND ENERGY STORAGE SYSTEM**
KOMMUNIKATIONSVERFAHREN FÜR EIN ENERGIESPEICHERSYSTEM UND ENERGIESPEICHERSYSTEM
PROCÉDÉ DE COMMUNICATION POUR SYSTÈME DE STOCKAGE D'ÉNERGIE, ET SYSTÈME DE STOCKAGE D'ÉNERGIE

(43) Date of publication of application: 02.10.2024
(73) Proprietor: Contemporary Amperex Technology (Hong Kong) Limited, Central, Central And Western District (HK)
(72) Inventor: ZHENG, Zhimin, Ningde, Fujian 352100 (CN); ZHOU, Linggang, Ningde, Fujian 352100 (CN)
(74) Representative: Rowlands, Stuart Michael
(86) International application number: PCT/CN2022/091011
(87) International publication number: WO 2023/212869

(56) References cited:
- WO-A1-2021/173378
- CN-A- 104 882 919
- CN-A- 110 896 156
- CN-A- 110 896 233
- CN-U- 209 056 569
- CN-U- 210 576 302
- US-A1- 2015 028 816
- US-A1- 2016 247 389

## Description

### TECHNICAL FIELD

The present application relates to the field of batteries, and more particularly, to a communication method of an energy storage system and an energy storage system.

### BACKGROUND

In recent years, batteries have been widely applied to many fields, such as electric tools, electric bicycles, electric motorcycles, electric vehicles, military equipment and aerospace, thus getting great development. In addition to a battery as an energy storage unit, a battery energy storage system includes a battery management system (BMS) for safety detection and efficiency management of the battery.

In the battery management system, a sampling module is configured to collect information of the battery, such as temperature or voltage, a communication module is configured to receive sampled data sent by the sampling module, and to transmit the sampled data to a processing module for further processing. When a wired communication is used between the communication module and the sampling module, reliability of communication in the battery management system is limited by problems such as bad contact and the service life of a wired harness. Therefore, how to improve safety and reliability of communication in an energy storage system is an urgent problem to be solved.

WO2021/173378A1 relates to wireless battery management systems (BMS) in vehicles. A test system for a BMS provides a plurality of interference test profiles each comprising interference signals for testing the BMS. For each interference test profile, the interference signals are broadcast by the test system during operation of the BMS. The test system samples packets received by the wireless network controller from at least one battery measurement device during the broadcast of the interference signals and determines a packet error rate (PER) of the BMS for the interference test profile.

US2015/028816A1 relates to a wireless battery area network system, in which wireless nodes are configured in the network and a plurality of batteries are linked to a master battery management unit by establishing a wireless battery area network within a battery pack that include slave units. Voltage, current, temperature, or impedance of individual batteries are monitored.

### SUMMARY

Embodiments of the present application provide a communication method of an energy storage system and an energy storage system, which could effectively improve safety or reliability of communication in the energy storage system.

In a first aspect, a communication method of an energy storage system as set out in claim 1.

In the embodiments of the present application, the sampling module and the communication module in the energy storage system transmit the sampled data through the wireless communication connection, which could avoid a communication interruption caused by problems such as bad contact and the life of a harness during wired harness communication, and improve reliability of communication between the sampling module and the communication module.

A distance between the communication module and the sampling module is greater than or equal to a first distance, and less than or equal to a second distance, where the first distance is a distance so that high and low voltage electrical isolation is formed between the sampling module and the communication module, and the second distance is a maximum communication distance of the wireless communication connection.

In the embodiments of the present application, the sampling module is connected to a battery in the energy storage system, and belongs to part of a high-voltage loop, and the communication module belongs to part of a low-voltage loop. Therefore, the distance between the sampling module and the communication module is set to be greater than or equal to the first distance, and less than or equal to the second distance, so that the distance between the sampling module and the communication module satisfies both a demand of electrical isolation and a requirement of wireless communication. The air between the sampling module and the communication module can be used to form the electrical isolation without provision of an isolation device while communication cables between the sampling module and the communication module are saved.

In some embodiments, the first distance ranges from 10cm to 20cm.

In some embodiments, before receiving, by the communication module through the wireless communication connection, the sampled data sent by the sampling module, the communication method further includes: sending, by the communication module, a first instruction to the sampling module, the first instruction being configured to instruct the sampling module to send the sampled data.

In the embodiments of the present application, the communication manner between the communication module and the sampling module adopts a master-slave mode, where the communication module as a master sends the first instruction to the sampling module to instruct the sampling module to send the sampled data, and the sampling module sends the sampled data to the communication module after receiving the first instruction. Compared with a manner in which the sampling module keeps sending the sampled data and the communication module keeps receiving the sampled data, the above manner can effectively save communication traffic between the communication module and the sampling module, and improve efficiency of the communication between the communication module and the sampling module.

In some embodiments, the energy storage system further includes a main control module, a wired communication connection is provided between the communication module and the main control module, and the communication method further includes: sending, by the communication module, the sampled data to the main control module through the wired communication connection.

In the embodiments of the present application, a wired connection is adopted between the communication module and the main control module that belong to the low-voltage loop for wired communication, so that the connection between the communication module and the main control module is stable and reliable, and helps to improve stability of data transmission.

In some embodiments, the energy storage system further includes: an energy storage cabinet, the energy storage cabinet being configured to accommodate the energy storage unit, the sampling module, the communication module, and the main control module.

In some embodiments, a distance between the sampling module and any position on a body of the energy storage cabinet is greater than a second distance.

In the embodiments of the present application, the energy storage cabinet accommodates various functional components in the energy storage system, and the distance between the sampling module and any position on the body of the energy storage cabinet is greater than the second distance. In other words, any position outside the body of the energy storage cabinet is unable to establish a communication connection with the sampling module. Accordingly, other communication receivers can be effectively prevented from communicating with the sampling module on the outside of the energy storage cabinet to steal data. This helps to improve safety and reliability of the communication between the sampling module and the communication module to prevent data theft.

In some embodiments, the communication method further includes: sending, by the communication module, first information to the main control module when the sampled data is not received by the communication module, the first information being configured to instruct the main control module to control locking of the energy storage cabinet.

In the embodiments of the present application, when the sampled data is not received by the communication module, by sending the first information to the main control module to instruct the main control module to control locking of the energy storage cabinet, other communication receivers can be prevented from entering the energy storage cabinet to establish a communication connection with the sampling module and steal data when the sampled data is not received. Thereby, safety and reliability of the communication in the energy storage system is effectively improved.

In some embodiments, the wireless communication connection is a near field communication connection.

In the embodiments of the present application, the wireless communication connection is established by means of near field communication, the cost of the near field communication is relatively low and the effective communication distance thereof is usually within 20cm, and the distance for the electrical isolation formed by the air between the sampling module and the communication module is usually required to range from 10cm to 20cm. Therefore, the wireless communication connection is established by means of near field communication, which can satisfy the demand of the electrical isolation between the sampling module and the communication module within the effective communication distance, and help to improve the safety and the reliability of the communication in the energy storage system.

In some embodiments, the wireless communication connection is a Bluetooth communication connection.

In the embodiments of the present application, the wireless communication connection is established by means of Bluetooth communication, and the effective communication distance of the Bluetooth communication is longer. When the capacity of the energy storage unit in the energy storage system is relatively large, the Bluetooth communication can realize wireless communication at a relatively long distance, satisfy the demand of the electrical isolation between the sampling module and the communication module, and help to improve the safety and the reliability of the communication in the energy storage system.

In some embodiments, the sampled data includes a temperature of the energy storage unit and/or a voltage of the energy storage unit.

In a second aspect, an energy storage system is provided as set out in claim 11.

A distance between the communication module and the sampling module is greater than or equal to a first distance, and less than or equal to a second distance, where the first distance is a distance so that high and low voltage electrical isolation is formed between the sampling module and the communication module, and the second distance is a maximum communication distance of the wireless communication connection.

In some embodiments, the first distance ranges from 10cm to 20cm.

In some embodiments, the communication module is further configured to: send a first instruction to the sampling module before receiving, through the wireless communication connection, the sampled data sent by the sampling module, the first instruction being configured to instruct the sampling module to send the sampled data.

In some embodiments, the energy storage system further includes: a main control module, a wired communication connection being provided between the communication module and the main control module; and the communication module is further configured to send the sampled data to the main control module through the wired communication connection.

In some embodiments, the energy storage system further includes: an energy storage cabinet, the energy storage cabinet being configured to accommodate the energy storage unit, the sampling module, the communication module, and the main control module.

In some embodiments, a distance between the sampling module and any position on a body of the energy storage cabinet is greater than a second distance.

In some embodiments, the communication module is further configured to send first information to the main control module when the sampled data is not received, and the first information is configured to instruct the main control module to control locking of the energy storage cabinet.

In some embodiments, the wireless communication connection is a near field communication connection.

In some embodiments, the wireless communication connection is a Bluetooth communication connection.

In some embodiments, the sampled data includes a temperature of the energy storage unit and/or a voltage of the energy storage unit.

### BRIEF DESCRIPTION OF THE DRAWINGS

In order to illustrate the technical solutions in the embodiments of the present application more clearly, brief description will be made below to the accompanying drawings required in the embodiments of the present application. It will be apparent that the accompanying drawings described below are some embodiments of the present application only, and other drawings could be obtained based on these accompanying drawings by those ordinary skilled in this art without creative efforts.
FIG. 1 is a schematic structural diagram of an energy storage system of the present application;
FIG. 2 is a schematic flowchart of a communication method of an energy storage system of the present application;
FIG. 3 is another schematic flowchart of a communication method of an energy storage system of the present application;
FIG. 4 is another schematic structural diagram of an energy storage system of the present application; and
FIG. 5 is a further schematic structural diagram of an energy storage system of the present application.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, "a plurality of" means two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless explicitly specified and defined otherwise, terms "installation", "interconnection" and "connection" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists, both A and B exist, and B exists. In addition, the character "/" in the present application generally indicates that the associated objects before and after the character are in an "or" relationship.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions. The terms such as "first" and "second" in the specification and the claims of the present application as well as the drawings described above are used to distinguish different objects, and shall not be used to indicate a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

Thanks to the development of battery technologies, a battery energy storage system with a battery as an energy storage unit has been widely used in recent years. In addition to a battery as an energy storage unit, a battery energy storage system is configured with a battery management system (BMS) for safety detection and efficiency management of the battery.

The battery management system includes a sampling module, a communication module, and a main control module. The sampling module collects various parameters of the energy storage unit, and sends the collected data to the communication module, and then the data is transmitted by the communication module to the main control module for further operations such as data processing. The sampling module and the communication module communicate with each other usually using a controller area network (CAN), and carry out information exchange based on a CAN bus. During the practical application, on the one hand, a wired communication manner is adopted between the sampling module and the communication module, and the communication quality thereof is limited by factors such as good or bad contact of a wired harness and the service life of the harness; and on the other hand, the sampling module is connected to the energy storage unit, which belongs to a high-voltage loop, and the communication module is connected to other modules such as the main control module, which belongs to a low-voltage loop. The sampling module and the communication module in the wired connection are usually placed very close to each other, the high-voltage loop produces serious electrical interference with the low-voltage loop, which interferes with the communication between the sampling module and the communication module and affects the safety of the energy storage system.

In view of this, the present application provides a communication method of an energy storage system, which could effectively improve safety and reliability of communication in the energy storage system.

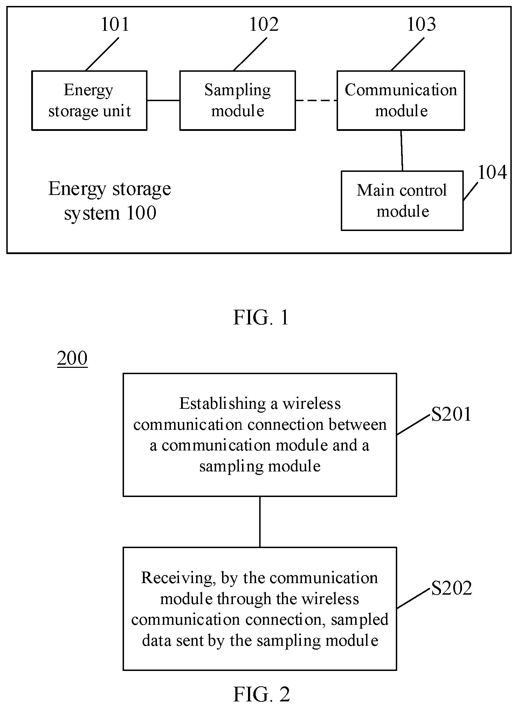

FIG. 1 is a schematic structural diagram of an energy storage system 100 according to an embodiment of the present application.

As shown in FIG. 1, the energy storage system 100 includes an energy storage unit 101, a sampling module 102, and a communication module 103, where the sampling module 102 is connected to the energy storage unit 101 for acquiring sampled data.

It should be understood that, in the present application, a battery refers to a physical module including one or more battery cells to provide electric energy. For example, the battery mentioned in the present application may include a battery module, a battery pack, or the like. The battery generally includes a box for packaging one or more battery cells. The box may avoid liquid or other foreign matters to affect charging or discharging of the battery cell. The energy storage unit 101 includes at least one battery. The sampling module 102 is connected to the energy storage unit 101, that is, the sampling module 102 is connected to the at least one battery for acquiring sampled parameters of the at least one battery.

FIG. 2 is a schematic flowchart of a communication method 200 of an energy storage system 100 according to an embodiment of the present application. As shown in FIG. 2, the communication method 200 includes:
S201, establishing a wireless communication connection between a communication module 103 and a sampling module 102; and
S202, receiving, by the communication module 103 through the wireless communication connection, sampled data sent by the sampling module 102.

Specifically, both the communication module 103 and the sampling module 102 in the embodiments of the present application are configured with a wireless communication controller, so that the communication module 103 and the sampling module 102 no longer carry out wired communication based on a wired connection, but carry out wireless communication by establishing a wireless communication connection, and the communication module 103 receives, through the wireless communication connection, the sampled data sent by the sampling module 102. The wireless communication connection described in the present application refers to various wireless communication manners with a transmission rate greater than or equal to 100kbps, for example, WIFI, Bluetooth, a cellular network.

In this embodiment, the communication module 103 and the sampling module 102 carry out wireless communication by means of establishing the wireless communication connection, which could effectively avoid a communication interruption caused by problems such as bad contact and the short service life of a wired harness in comparison with wired communication, thereby improving reliability of the communication between the sampling module 102 and the communication module 103.

Optionally, as shown in FIG. 1, the energy storage system 100 further includes a main control module 104, a communication connection is established between the main control module 104 and the communication module 103, the main control module 104 is configured to control the communication module 103 to establish a wireless communication connection with the sampling module 102, and the main control module 104 is further configured to control the communication module 103 to receive, through the wireless communication connection, the sampled data sent by the sampling module 102.

In this embodiment, the communication connection is established between the main control module 104 and the communication module 103, which means that a wired communication connection or a wireless communication connection may be established between the main control module 104 and the communication module 103.

A distance between the communication module 103 and the sampling module 102 is greater than or equal to a first distance, and less than or equal to a second distance. The first distance is a distance so that high and low voltage electrical isolation is formed between the sampling module 102 and the communication module 103, and the second distance is a maximum communication distance of the wireless communication connection.

It should be understood that, in order to meet different power demands, the energy storage system 100 usually includes a plurality of energy storage units 101, each energy storage unit 101 is connected to a corresponding sampling module 102, and each sampling module 102 communicates with a corresponding communication module 103. Since the voltage formed by the plurality of energy storage units 101 connected in series can reach the kilovolt level, the sampling modules 102 connected with them belong to part of the high-voltage loop. The communication modules 103 are usually connected to a low-voltage control module or some processing modules, and they belong to part of the low-voltage loop. The high-voltage loop transmits heavy current during working, which very easily generates electromagnetic interference within a certain range of distance around it, and badly affects the current transmission of the low-voltage loop, that is, causing electrical interference. If the sampling module 102 and the communication module 103 are connected using a harness, in order to save the internal space of the energy storage system 100, the communication module 103 is limited by the wired harness in a position closer to the sampling module 102. If the sampling module 102 and the communication module 103 are directly connected through the wired harness without other protective measures, the high-voltage loop causes serious electrical interference with the low-voltage loop, leading to the damage to the entire energy storage system, and further resulting in safety issues.

In order to solve the issue of the electrical interference between the high and low voltage loops, it is necessary to form high and low voltage electrical isolation between the high and low voltage loops, and the high and low voltage electrical isolation means that no current flows from the high-voltage loop to the low-voltage loop, so that the low-voltage loop becomes an electrically isolated and independent safety system. For the electrical interference of the high-voltage loop on the low-voltage loop, the electrical interference of the high-voltage loop on the low-voltage loop can be reduced or avoided by means of providing an electrical isolation plate on an element (such as the energy storage unit 101) of the high-voltage loop, designing a multistage step-down circuit between the high-voltage loop and the low-voltage loop, providing an additional electrical isolation device (such as a transformer, a relay) in the low-voltage loop, or the like. However, all the above means need to provide an additional circuit or install an additional element or device, which increases the cost of the energy storage system 100.

In this embodiment, specifically, the sampling module 102 is connected to the energy storage unit 101, so as to collect the sampled data of the energy storage unit 101, and the communication module 103 and the sampling module 102 communicate through the wireless communication connection. Thereby, the position of the communication module 103 is not limited by a wired harness, and the communication module 103 can be flexibly disposed in any desired position. In addition, the electrical interference caused by the high-voltage loop where the sampling module 102 is located is within a certain range, that is, it will be affected by the electrical interference of the high-voltage loop within a certain distance from the high-voltage loop, and will not be affected by the electrical interference of the high-voltage loop beyond the distance, that is, the high and low voltage electrical isolation can be formed beyond the distance, and the distance is the first distance. In this embodiment, by setting the distance between the communication module 103 and the sampling module 102 in a certain range, that is, to be greater than or equal to the first distance and less than or equal to the second distance, the distance between the communication module 103 and the sampling module 102 can satisfy the distance required to form the high and low voltage electrical isolation, and be within a range allowed by the wireless communication connection. In other words, the use of the wireless communication distance between the sampling module 102 and the communication module 103 can satisfy the demand of the electrical isolation between the sampling module 102 and the communication module 103 without provision of an additional circuit, element or device while ensuring the wireless communication, improving the safety of the communication while improving the reliability of the communication, and further improving the safety of the energy storage system 100.

It should be understood that the second distance may be the maximum communication distance of the wireless communication connection, that is, when the distance between the sampling module 102 and the communication module 103 is less than or equal to the second distance, the communication module 103 can wirelessly communicate with the sampling module 102, and the communication module 103 can receive the sampled data sent by the sampling module 102; and when the distance between the sampling module and the communication module 103 is greater than the second distance, the communication module 103 is unable to wirelessly communicate with the sampling module 102 or unable to communicate stably with the sampling module 102, and the sampled data sent by the sampling module 102 cannot be received or cannot be effectively received by the communication module 103.

Optionally, the first distance ranges from 10cm to 20cm.

Specifically, the electrical interference of the kilovolt-level high-voltage loop usually ranges from 10cm to 20cm, that is, the first distance usually ranges from 10cm to 20cm. Exemplarily, the energy storage unit 101 or the plurality of energy storage units 101 in the energy storage system 100 are connected in series to reach a voltage of 1500V, and the first distance is set to range from 10cm to 20cm, so that the communication module 103 is disposed in a position where the high and low voltage electrical isolation can be formed with the kilovolt-level high-voltage loop and wirelessly communicates with the sampling module 102.

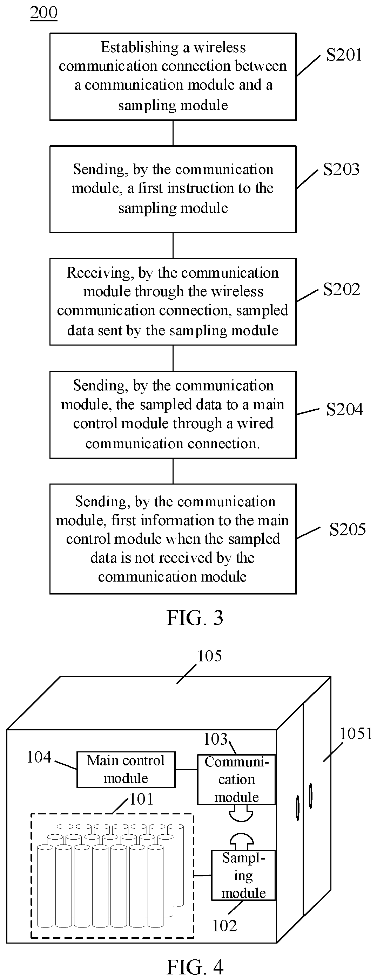

FIG. 3 is another schematic flowchart of a communication method 200 of an energy storage system 100 according to an embodiment of the present application.

Optionally, as shown in FIG. 3, before S202, the communication method 200 further includes:
S203, sending, by the communication module 103, a first instruction to the sampling module 102, the first instruction being configured to instruct the sampling module 102 to send the sampled data.

Specifically, a master-slave communication mode may be adopted between the communication module 103 and the sampling module 102, that is, the communication module 103 as a master sends the first instruction to the sampling module 102, and the sampling module 102 as a slave sends the sampled data to the communication module 103 after the sampling module 102 receives the first instruction. In an example, the communication module 103 may continuously send the first instruction to the sampling module 102. In another example, the communication module 103 may send the first instruction to the sampling module 102 according to a certain time sequence. For example, the sampling module 102 sends the first instruction once every other first time, and the first time can be set according to parameters, such as a sampling frequency of the sampling module 102.

In this embodiment, the master-slave communication mode is adopted between the communication module 103 and the sampling module 102. In comparison with a communication manner in which the sampling module 102 keeps sending the sampled data and the communication module 103 keeps receiving the sampled data, the communication module 103 can send the first instruction to the sampling module 102 when it needs to acquire the sampled data, and the sampling module 102 then sends the sampled data after receiving the first instruction, which can effectively save communication traffic between the communication module 103 and the sampling module 102, and improve efficiency of the communication between the communication module 103 and the sampling module 102.

Optionally, a wired communication connection is provided between the communication module 103 and the main control module 104. With reference to FIG. 3, the communication method 200 further includes:
S204, sending, by the communication module 103, the sampled data to a main control module 104 through a wired communication connection.

Specifically, the wired communication connection is established between the communication module 103 and the main control module 104. The communication module 103 transmits the sampled data to the main control module 104 through the wired communication connection after receiving the sampled data, and the sampled data is further analyzed and processed by the main control module 104. It should be understood that the energy storage system 100 may include a plurality of communication modules 103. Each communication module 103 establishes a wireless communication connection with and a corresponding sampling module 102, and the main control module 104 can be connected to the plurality of communication modules 103 through a wire, so as to acquire the sampled data of the entire energy storage system.

**In** this embodiment, the wired communication connection is established between the communication module 103 and the main control module 104 that also belongs to the low-voltage loop, and the wired connection makes the data transmission between the communication module 103 and the main control module 104 stable and reliable, which helps to improve the stability of the data transmission.

Optionally, the main control module 104 may send the sampled data to a management system, such as an upper computer, a cloud. The management system may establish communication connections with the main control modules 104 of a plurality of energy storage systems 100, so as to manage and control the plurality of energy storage systems 100, realizing data sharing and communication.

FIG. 4 is another schematic structural diagram of an energy storage system 100 of the present application.

Optionally, the energy storage system 100 further includes an energy storage cabinet 105, and the energy storage cabinet 105 is configured to accommodate the energy storage unit 101, the sampling module 102, the communication module 103, and the main control module 104.

Specifically, various functional components of the energy storage system 100 are usually accommodated in the energy storage cabinet 105, and the energy storage cabinet 105 can protect the various functional components of the energy storage system 100. The energy storage cabinet 105 usually has a door 1051, and the door 1051 facilitates a user or maintainer to enter the interior of the energy storage system 100 to check, adjust or replace various functional components. The energy storage cabinet 105 may accommodate at least one energy storage unit 101, at least one sampling module 102, at least one communication module 103, and at least one main control module 104. The energy storage system 100 may include a plurality of energy storage cabinets 105.

Exemplarily, in an embodiment, the energy storage cabinet 105 accommodates one communication module 103 and a plurality of sampling modules 102, and the one communication module 103 receives, through wireless communication, sampled data sent by the plurality of sampling modules 102.

Exemplarily, in an embodiment, the energy storage cabinet 105 accommodates a plurality of communication modules 103 and a plurality of sampling modules 102, and the plurality of communication modules 103 are in one-to-one correspondence to the plurality of sampling modules 102, and each communication module 103 receives, through wireless communication, sampled data sent by a corresponding sampling module 102.

Exemplarily, in an embodiment, the energy storage cabinet 105 accommodates a plurality of communication modules 103 and a plurality of sampling modules 102, and each of the plurality of communication modules 103 corresponds to a part of the plurality of sampling modules 102, and each communication module 103 receives, through wireless communication, sampled data sent by the corresponding a part of the plurality of sampling modules 102.

Optionally, a distance between the sampling module 102 and any position on a body of the energy storage cabinet 105 is greater than the second distance.

Specifically, the sampling module 102 is placed in a certain position in the energy storage cabinet 105, and the position allows the distance between any position on the body of the energy storage cabinet 105 and the sampling module 102 to be greater than the second distance. In other words, the distance between any position outside the energy storage cabinet 105 and the sampling module 102 is greater than the maximum communication distance of the wireless communication connection of the sampling module 102, which means that other communication receivers located outside the energy storage cabinet 105 are unable to receive, through the wireless communication connection, the data sent by the sampling module 102.

Optionally, with reference to FIG. 3, the communication method 200 further includes:
S205, sending, by the communication module 103, first information to the main control module 104 when the sampled data is not received by the communication module 103, the first information being configured to instruct the main control module 104 to control locking of the energy storage cabinet 105.

Specifically, when the sampled data is not received by the communication module 103, it means that there is a problem in the wireless communication connection between the communication module 103 and the sampling module 102, for example, the communication module 103 is stolen, and the distance from the sampling module 102 is greater than the second distance. Once the sampled data is not received by the communication module 103, the communication module 103 immediately sends the first information to the main control module 104, so that the main control module 104 controls the locking of the energy storage cabinet 105. For example, the main control module 104 controls the locking of the door of the energy storage cabinet 1051, so that the energy storage cabinet 105 is in a closed state. In this case, since the distance between the sampling module 102 and any position on the body of the energy storage cabinet 105 is greater than the second distance, other communication receivers located outside the energy storage cabinet are unable to receive the sampled data sent by the sampling module 102 by approaching the sampling module 102. In other words, after the energy storage cabinet 105 locks, any other communication receiver that is located outside the energy storage cabinet 105 and does not belong to the energy storage system 100 is unable to establish a wireless communication connection with the sampling module 102, which can effectively prevent the sampled data from being stolen.

In this embodiment, by placing the sampling module 102 in a specific position in the energy storage cabinet 105, a communication receiver or communication device located outside the energy storage cabinet 105 is unable to establish a wireless communication connection with the sampling module 102, and when the sampled data is not received by the communication module 103, the communication module 103 sends the first information to control the locking of the energy storage cabinet 105, which can effectively prevent another communication device or communication receiver not belonging to the energy storage system 100 from approaching the sampling module 102 to steal the data, improve the safety and the reliability of the communication between the sampling module 102 and the communication module 103, and further improve the information safety of the energy storage system 100.

Optionally, the wireless communication connection is a near field communication (NFC) connection.

Specifically, the wireless communication connection may be implemented in the form of NFC, the maximum communication distance of NFC is usually within 20cm, and the transmission rate ranges from 100kbps to 500kbps, which can satisfy the demand of data transmission between the sampling module 102 and the communication module 103. Exemplarily, when the first distance is 10cm, the communication module 103 is disposed in a position from the sampling module 102 by a distance greater than or equal to 10cm and less than or equal to 20cm. The electrical isolation can be formed between the sampling module 102 and the communication module 103, and the sampling module 102 can wirelessly communicate with the communication module 103.

In this embodiment, the wireless communication connection is established between the sampling module 102 and the communication module 103 by means of NFC, which has the low cost and can satisfy the demand of communication between the sampling module 102 and the communication module 103. In addition, thanks to the relatively short maximum communication distance of NFC, it is more convenient to dispose the sampling module 102 in a specific position of the energy storage cabinet 105 for guarding data against theft.

Optionally, the wireless communication connection is a Bluetooth communication connection.

Specifically, the wireless communication connection may be implemented in the form of Bluetooth, the range of the maximum communication distance of Bluetooth is wide, and the transmission distance of Bluetooth can cover the range of 1m to 100m as the continuous update of Bluetooth technology. Bluetooth mentioned in the present application is Bluetooth technology that supports short distance communication of devices, and its maximum communication distance is usually within 10m. Exemplarily, when the first distance is 20cm and the second distance is 1m, the communication module 103 is disposed in a position from the sampling module 102 by a distance greater than or equal to 20cm and less than or equal to 1m.

In this embodiment, the wireless communication connection is established between the sampling module 102 and the communication module 103 by means of Bluetooth, which can support data transmission at a longer distance, and can satisfy the demand of wireless communication between the sampling module 102 and the communication module 103 when the capacity of the energy storage system 100 is relatively large.

Optionally, the sampled data includes a temperature of the energy storage unit 101 and/or a voltage of the energy storage unit 101.

Specifically, the sampling module may be a temperature and voltage sampling module, which collects the temperature and/or voltage of the energy storage unit 101 and sends it to the communication module 103. In other examples, the sampling module 102 may be another sampling module, which can collect other data such as a state of charge (SOC) of the energy storage unit 101.

A structure of an energy storage system 100 provided in the embodiments of the present application will be further introduced below.

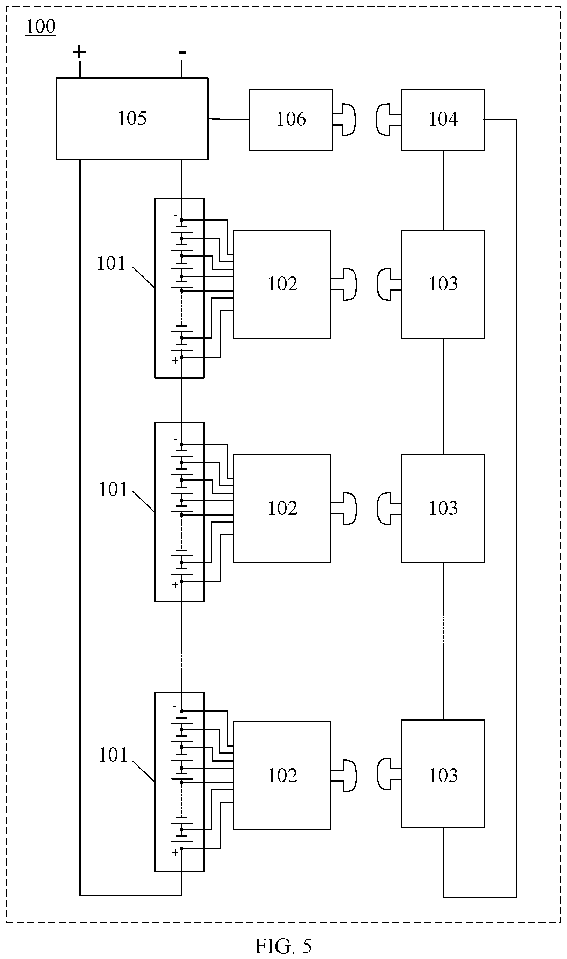

As described above, with reference to FIG. 5, the energy storage system 100 includes an energy storage unit 101, a sampling module 102, and a communication module 103.

The sampling module 102 is connected to the energy storage unit 101 for acquiring sampled data. A wireless communication connection is provided between the communication module 103 and the sampling module 102, and the communication module 103 is configured to receive, through the wireless communication connection, the sampled data sent by the sampling module 102.

Optionally, with reference to FIG. 5, the energy storage system 100 further includes a main control module 104. A wired communication connection is provided between the communication module 103 and the main control module 104, and the communication module 103 is further configured to send the sampled data to the main control module 104 through the wired communication connection.

Optionally, the energy storage system 100 further includes an energy storage cabinet 105, and the energy storage cabinet 105 is configured to accommodate the energy storage unit 101, the sampling module 102, the communication module 103, and the main control module 104.

A distance between the communication module 103 and the sampling module 102 is greater than or equal to a first distance, and less than or equal to a second distance, where the first distance is a distance so that high and low voltage electrical isolation is formed between the sampling module 102 and the communication module 103, and the second distance is a maximum communication distance of the wireless communication connection.

Optionally, the first distance ranges from 10cm to 20cm.

Optionally, the communication module 103 is further configured to send a first instruction to the sampling module 102 before receiving, through the wireless communication connection, the sampled data sent by the sampling module 102, and the first instruction is configured to instruct the sampling module 102 to send the sampled data.

Optionally, a distance between the sampling module 102 and any position on a body of the energy storage cabinet 105 is greater than the second distance.

Optionally, the communication module 103 is further configured to send first information to the main control module 104 when the sampled data is not received, and the first information is configured to instruct the main control module 104 to control locking of the energy storage cabinet 105.

Optionally, the wireless communication connection is a near field communication connection.

Optionally, the wireless communication connection is a Bluetooth communication connection.

Optionally, the sampled data includes a temperature of the energy storage unit 101 and/or a voltage of the energy storage unit 101.

Various modules or units in the energy storage system 100 can be configured to execute various steps in the communication method 200 of the energy storage system 100, and the similar technical effects are achieved, which will not be repeated redundantly here.

In addition, optionally, with reference to FIG. 5, the energy storage system 100 further includes a high-voltage control box 105 and a high-voltage control module 106, the high-voltage control box 105 is connected to a plurality of energy storage units 101, and the high-voltage control box 105 includes power control devices such as a relay, a circuit breaker. The high-voltage control module 106 is connected to the high-voltage control box 105, and configured to control the on-off of the power devices such as the relay, the circuit breaker in the high-voltage control box 105.

Optionally, a wireless communication connection is provided between the high-voltage control module 106 and the main control module 104, the main control module 104 can receive information through the wireless communication connection, such as high-voltage loop power data sent by the high-voltage control module 106, so as to realize the management and control of the entire energy storage system 100 by the main control module 104.

Similarly, this wireless communication connection is similar to the wireless communication connection between the sampling module 102 and the communication module 103, and its implementation manner may be the same as the implementation manner of the wireless communication connection between the sampling module 102 and the communication module 103, which will not be repeated redundantly here.

A person of ordinary skill in the art may realize that, units of various examples described in connection with the embodiments disclosed herein can be implemented by electronic hardware, computer software, or a combination of both, and in order to clearly describe the interchangeability of hardware and software, in the above description, the composition and steps of the various examples have been generally described according to functions. Whether these functions are performed by hardware or software depends on specific applications and designed constraint conditions of the technical solutions. Those skilled may implement the described functions by using different methods for each specific application, but this implementation should not be considered to be beyond the scope of the present application.

In the several embodiments provided in the present disclosure, it should be understood that the disclosed system, apparatus may be implemented in other manners. For example, the embodiments of the above-described apparatus are only exemplary, for example, the division of the units is only a logic function division, other division modes may be adopted in practice, e.g., multiple units or components may be combined or integrated in another system, or some characteristics may be omitted or be not executed. In addition, the displayed or discussed mutual coupling or direct coupling or communication connection may be indirect coupling or communication connection through some interfaces, apparatuses or units, and may also be electrical, mechanical, or connection in other forms.

The units described as separate components may or may not be physically separate, and components displayed as units may or may not be physical units, may be located in one position, or may be distributed on multiple network units. Part of or all of the units here may be selected according to a practical need to achieve the objectives of the solutions of the embodiments of the present application.

In addition, various functional units in the embodiments of the present application may be integrated into a processing unit, or each unit may exist alone physically, or two or more than two units may be integrated into one unit. The integrated unit may be implemented in a form of hardware, or may be implemented in a form of a software functional unit.

If being implemented in the form of a software functional unit and sold or used as a separate product, the integrated unit may be stored in a computer storage medium. Based on such understanding, the nature of the technical solutions of the present application, or the part contributing to the prior art, or all of or part of the technical solutions may be implemented in a form of software product. The computer software product is stored in a storage medium and includes several instructions for instructing a computer device (which may be a personal computer, a server, or a network device, and the like) to execute all of or part of the steps of the method described in the embodiments of the present application. The foregoing computer storage medium includes: various media that may store program codes, such as a U-disk, a removable hard disk, a read-only memory (ROM), a random-access memory (RAM), a magnetic disk, a compact disk, and so on.

It should be understood that specific examples in the present application are just for helping those skilled in the art better understand the embodiments of the present application, rather than for limiting the scope of the present application.

It should be further understood that, in various embodiments of the present application, values of sequence numbers of the various processes do not mean an order of execution which should be determined based upon functionalities and internal logics thereof, rather than setting any limitation to implementation of the embodiment of the present application.

It should be further understood that various implementation manners described in the specification may be implemented either individually or in combination, which is not limited in the embodiments of the present application.

## Claims

1. A communication method of an energy storage system, wherein the energy storage system (100) comprises an energy storage unit (101), a sampling module (102), and a communication module (103), the sampling module (102) is coupled to the energy storage unit (101) for acquiring sampled data, and the communication method comprises:
establishing a wireless communication connection between the communication module (103) and the sampling module (102); and
receiving, by the communication module (103) through the wireless communication connection, the sampled data sent by the sampling module (102);
**characterized in that** a distance between the communication module (103) and the sampling module (102) is greater than or equal to a first distance, and less than or equal to a second distance, wherein the first distance is a distance so that high and low voltage electrical isolation is formed between the sampling module (102) and the communication module (103), and the second distance is a maximum communication distance of the wireless communication connection.

2. The communication method according to claim 1, wherein the first distance ranges from 10cm to 20cm.

3. The communication method according to any one of claims 1 to 2, wherein before receiving, by the communication module (103) through the wireless communication connection, the sampled data sent by the sampling module (102), the communication method further comprises:
sending, by the communication module (103), a first instruction to the sampling module (102), the first instruction being configured to instruct the sampling module (102) to send the sampled data.

4. The communication method according to any one of claims 1 to 3, wherein the energy storage system further comprises a main control module (104), a wired communication connection is provided between the communication module (103) and the main control module (104), and the communication method further comprises:
sending, by the communication module (103), the sampled data to the main control module (104) through the wired communication connection.

5. The communication method according to claim 4, wherein the energy storage system further comprises: an energy storage cabinet (105), the energy storage cabinet (105) being configured to accommodate the energy storage unit (101), the sampling module (102), the communication module (103), and the main control module (104).

6. The communication method according to claim 6, wherein a distance between the sampling module (102) and any position on a body of the energy storage cabinet (105) is greater than a second distance.

7. The communication method according to claim 5 or 6, wherein the communication method further comprises:
sending, by the communication module (103), first information to the main control module (104) when the sampled data is not received by the communication module (103), the first information being configured to instruct the main control module (104) to control locking of the energy storage cabinet (105).

8. The communication method according to any one of claims 1 to 7, wherein the wireless communication connection is a near field communication connection.

9. The communication method according to any one of claims 1 to 7, wherein the wireless communication connection is a Bluetooth communication connection.

10. The communication method according to any one of claims 1 to 9, wherein the sampled data comprises a temperature of the energy storage unit (101) and/or a voltage of the energy storage unit (101).

11. An energy storage system, wherein the energy storage system comprises:
an energy storage unit (101);
a sampling module (102), the sampling module being coupled to the energy storage unit (101) for acquiring sampled data; and
a communication module (103), a wireless communication connection being provided between the communication module (103) and the sampling module (102), the communication module (103) being configured to perform the communication method of any one of claims 1 to 10;
**characterized in that** a distance between the communication module (103) and the sampling module (102) is greater than or equal to a first distance, and less than or equal to a second distance, wherein the first distance is a distance so that high and low voltage electrical isolation is formed between the sampling module (102) and the communication module (103), and the second distance is a maximum communication distance of the wireless communication connection.

12. The energy storage system according to claim 11, wherein the energy storage system further comprises:
a main control module (104), a wired communication connection being provided between the communication module (103) and the main control module (104); and
the communication module (103) is further configured to send the sampled data to the main control module (104) through the wired communication connection.

13. The energy storage system according to claim 12, wherein the energy storage system further comprises:
an energy storage cabinet (105), the energy storage cabinet (105) being configured to accommodate a plurality of energy storage units (101) and a plurality of sampling modules (102), the plurality of energy storage units (101) are in one-to-one correspondence to the plurality of sampling modules (102); or
the energy storage cabinet (105) is configured to accommodate one communication module (103), and the one communication module (103) receives, through the wireless communication connection, sampled data sent by a plurality of sampling modules (102).

## Patentansprüche

1. Kommunikationsverfahren für ein Energiespeichersystem, wobei das Energiespeichersystem (100) eine Energiespeichereinheit (101), ein Abtastmodul (102) und ein Kommunikationsmodul (103) umfasst, wobei das Abtastmodul (102) mit der Energiespeichereinheit (101) zum Erfassen abgetasteter Daten gekoppelt ist, und das Kommunikationsverfahren Folgendes beinhaltet:
Herstellen einer drahtlosen Kommunikationsverbindung zwischen dem Kommunikationsmodul (103) und dem Abtastmodul (102); und
Empfangen der vom Abtastmodul (102) gesendeten abgetasteten Daten durch das Kommunikationsmodul (103) über die drahtlose Kommunikationsverbindung;
**dadurch gekennzeichnet, dass** ein Abstand zwischen dem Kommunikationsmodul (103) und dem Abtastmodul (102) so groß wie oder größer als ein erster Abstand und so groß wie oder kleiner als ein zweiter Abstand ist, wobei der erste Abstand ein solcher Abstand ist, dass eine elektrische Hoch- und Niederspannungsisolation zwischen dem Abtastmodul (102) und dem Kommunikationsmodul (103) gebildet wird und der zweite Abstand ein maximaler Kommunikationsabstand der drahtlosen Kommunikationsverbindung ist.

2. Kommunikationsverfahren nach Anspruch 1, wobei der erste Abstand im Bereich von 10 cm bis 20 cm liegt.

3. Kommunikationsverfahren nach einem der Ansprüche 1 bis 2, wobei das Kommunikationsverfahren vor dem Empfang der vom Abtastmodul (102) gesendeten Abtastdaten durch das Kommunikationsmodul (103) über die drahtlose Kommunikationsverbindung ferner Folgendes beinhaltet:
Senden, durch das Kommunikationsmodul (103), eines ersten Befehls zu dem Abtastmodul (102), wobei der erste Befehl zum Anweisen des Abtastmoduls (102) zum Senden der abgetasteten Daten konfiguriert ist.

4. Kommunikationsverfahren nach einem der Ansprüche 1 bis 3, wobei das Energiespeichersystem ferner ein Hauptsteuermodul (104) umfasst, wobei eine drahtgebundene Kommunikationsverbindung zwischen dem Kommunikationsmodul (103) und dem Hauptsteuermodul (104) vorgesehen ist und das Kommunikationsverfahren ferner Folgendes beinhaltet:
Senden, durch das Kommunikationsmodul (103), der abgetasteten Daten zum Hauptsteuermodul (104) über die drahtgebundene Kommunikationsverbindung.

5. Kommunikationsverfahren nach Anspruch 4, wobei das Energiespeichersystem ferner Folgendes umfasst: einen Energiespeicherschrank (105), wobei der Energiespeicherschrank (105) zum Aufnehmen der Energiespeichereinheit (101), des Abtastmoduls (102), des Kommunikationsmoduls (103) und des Hauptsteuermoduls (104) konfiguriert ist.

6. Kommunikationsverfahren nach Anspruch 6, wobei ein Abstand zwischen dem Abtastmodul (102) und einer beliebigen Position an einem Körper des Energiespeicherschranks (105) größer ist als ein zweiter Abstand.

7. Kommunikationsverfahren nach Anspruch 5 oder 6, wobei das Kommunikationsverfahren ferner Folgendes beinhaltet:
Senden, durch das Kommunikationsmodul (103), erster Informationen zu dem Hauptsteuermodul (104), wenn die abgetasteten Daten nicht vom Kommunikationsmodul (103) empfangen werden, wobei die ersten Informationen zum Anweisen des Hauptsteuermoduls (104) konfiguriert ist, die Verriegelung des Energiespeicherschranks (105) zu steuern.

8. Kommunikationsverfahren nach einem der Ansprüche 1 bis 7, wobei die drahtlose Kommunikationsverbindung eine Nahfeldkommunikationsverbindung ist.

9. Kommunikationsverfahren nach einem der Ansprüche 1 bis 7, wobei die drahtlose Kommunikationsverbindung eine Bluetooth-Kommunikationsverbindung ist.

10. Kommunikationsverfahren nach einem der Ansprüche 1 bis 9, wobei die abgetasteten Daten eine Temperatur der Energiespeichereinheit (101) und/oder eine Spannung der Energiespeichereinheit (101) umfassen.

11. Energiespeichersystem, wobei das Energiespeichersystem Folgendes umfasst:
eine Energiespeichereinheit (101);
ein Abtastmodul (102), wobei das Abtastmodul mit der Energiespeichereinheit (101) zum Erfassen abgetasteter Daten gekoppelt ist; und
ein Kommunikationsmodul (103), wobei eine drahtlose Kommunikationsverbindung zwischen dem Kommunikationsmodul (103) und dem Abtastmodul (102) vorgesehen ist, wobei das Kommunikationsmodul (103) zum Ausführen des Kommunikationsverfahrens nach einem der Ansprüche 1 bis 10 konfiguriert ist;
**dadurch gekennzeichnet, dass** ein Abstand zwischen dem Kommunikationsmodul (103) und dem Abtastmodul (102) so groß wie oder größer als ein erster Abstand und so groß wie oder kleiner als ein zweiter Abstand ist, wobei der erste Abstand ein solcher Abstand ist, dass eine elektrische Hoch- und Niederspannungsisolation zwischen dem Abtastmodul (102) und dem Kommunikationsmodul (103) gebildet wird, und der zweite Abstand ein maximaler Kommunikationsabstand der drahtlosen Kommunikationsverbindung ist.

12. Energiespeichersystem nach Anspruch 11, wobei das Energiespeichersystem ferner Folgendes umfasst:
ein Hauptsteuermodul (104), wobei eine drahtgebundene Kommunikationsverbindung zwischen dem Kommunikationsmodul (103) und dem Hauptsteuermodul (104) vorgesehen ist; und
das Kommunikationsmodul (103) ferner zum Senden der abgetasteten Daten über die drahtgebundene Kommunikationsverbindung zum Hauptsteuermodul (104) konfiguriert ist.

13. Energiespeichersystem nach Anspruch 12, wobei das Energiespeichersystem ferner Folgendes umfasst:
einen Energiespeicherschrank (105), wobei der Energiespeicherschrank (105) zum Aufnehmen mehrerer Energiespeichereinheiten (101) und mehrerer Abtastmodule (102) konfiguriert ist, wobei die mehreren Energiespeichereinheiten (101) in einer Eins-zu-Eins-Entsprechung zu den mehreren Abtastmodulen (102) stehen; oder
wobei der Energiespeicherschrank (105) zum Aufnehmen eines Kommunikationsmoduls (103) konfiguriert ist und das eine Kommunikationsmodul (103) von mehreren Abtastmodulen (102) gesendete Abtastdaten über die drahtlose Kommunikationsverbindung empfängt.

## Revendications

1. Procédé de communication d'un système de stockage d'énergie, le système de stockage d'énergie (100) comprenant une unité de stockage d'énergie (101), un module d'échantillonnage (102) et un module de communication (103), le module d'échantillonnage (102) étant couplé à l'unité de stockage d'énergie (101) pour acquérir des données échantillonnées, et le procédé de communication comprenant les étapes consistant à :
établir une connexion de communication sans fil entre le module de communication (103) et le module d'échantillonnage (102) ; et
recevoir, par le module de communication (103) par l'intermédiaire de la connexion de communication sans fil, les données échantillonnées envoyées par le module d'échantillonnage (102) ;
le procédé étant **caractérisé en ce qu'**une distance entre le module de communication (103) et le module d'échantillonnage (102) est supérieure ou égale à une première distance et inférieure ou égale à une seconde distance, la première distance étant une distance telle qu'une isolation électrique à haute et basse tension est formée entre le module d'échantillonnage (102) et le module de communication (103), et la seconde distance étant une distance de communication maximale de la connexion de communication sans fil.

2. Procédé de communication selon la revendication 1, la première distance étant de l'ordre de 10 cm à 20 cm.

3. Procédé de communication selon l'une quelconque des revendications 1 à 2, le procédé de communication comprenant en outre, avant la réception, par le module de communication (103) par l'intermédiaire de la connexion de communication sans fil, des données échantillonnées envoyées par le module d'échantillonnage (102), l'étape consistant à :
envoyer, par le module de communication (103), une première instruction au module d'échantillonnage (102), la première instruction étant configurée pour donner l'instruction au module d'échantillonnage (102) d'envoyer les données échantillonnées.

4. Procédé de communication selon l'une quelconque des revendications 1 à 3, le système de stockage d'énergie comprenant en outre un module de commande principal (104), une connexion de communication filaire étant située entre le module de communication (103) et le module de commande principal (104), et le procédé de communication comprenant en outre l'étape consistant à :
envoyer, par le module de communication (103), les données échantillonnées au module de commande principal (104) par l'intermédiaire de la connexion de communication filaire.

5. Procédé de communication selon la revendication 4, le système de stockage d'énergie comprenant en outre : une armoire de stockage d'énergie (105), l'armoire de stockage d'énergie (105) étant configurée pour loger l'unité de stockage d'énergie (101), le module d'échantillonnage (102), le module de communication (103) et le module de commande principal (104).

6. Procédé de communication selon la revendication 6, une distance entre le module d'échantillonnage (102) et une position quelconque sur un corps de l'armoire de stockage d'énergie (105) étant supérieure à une seconde distance.

7. Procédé de communication selon la revendication 5 ou 6, le procédé de communication comprenant en outre l'étape consistant à :
envoyer, par le module de communication (103), des premières informations au module de commande principal (104) lorsque les données échantillonnées ne sont pas reçues par le module de communication (103), les premières informations étant configurées pour donner l'instruction au module de commande principal (104) de commander le verrouillage de l'armoire de stockage d'énergie (105).

8. Procédé de communication selon l'une quelconque des revendications 1 à 7, la connexion de communication sans fil étant une connexion de communication en champ proche.

9. Procédé de communication selon l'une quelconque des revendications 1 à 7, la connexion de communication sans fil étant une connexion de communication Bluetooth.

10. Procédé de communication selon l'une quelconque des revendications 1 à 9, les données échantillonnées comprenant une température de l'unité de stockage d'énergie (101) et/ou une tension de l'unité de stockage d'énergie (101).

11. Système de stockage d'énergie, le système de stockage d'énergie comprenant :
une unité de stockage d'énergie (101) ;
un module d'échantillonnage (102), le module d'échantillonnage étant couplé à l'unité de stockage d'énergie (101) pour acquérir des données échantillonnées ; et
un module de communication (103), une connexion de communication sans fil étant située entre le module de communication (103) et le module d'échantillonnage (102), le module de communication (103) étant configuré pour réaliser le procédé de communication selon l'une quelconque des revendications 1 à 10 ;
**caractérisé en ce que** :
une distance entre le module de communication (103) et le module d'échantillonnage (102) est supérieure ou égale à une première distance et inférieure ou égale à une seconde distance, la première distance étant une distance telle qu'une isolation électrique à haute et basse tension est formée entre le module d'échantillonnage (102) et le module de communication (103), et la seconde distance étant une distance de communication maximale de la connexion de communication sans fil.

12. Système de stockage d'énergie selon la revendication 11, le système de stockage d'énergie comprenant en outre :
un module de commande principal (104), une connexion de communication filaire étant située entre le module de communication (103) et le module de commande principal (104) ; et
le module de communication (103) étant configuré en outre pour envoyer les données échantillonnées au module de commande principal (104) par l'intermédiaire de la connexion de communication filaire.

13. Système de stockage d'énergie selon la revendication 12, le système de stockage d'énergie comprenant en outre :
une armoire de stockage d'énergie (105), l'armoire de stockage d'énergie (105) étant configurée pour loger une pluralité d'unités de stockage d'énergie (101) et une pluralité de modules d'échantillonnage (102), la pluralité d'unités de stockage d'énergie (101) étant en correspondance biunivoque avec la pluralité de modules d'échantillonnage (102) ; ou
l'armoire de stockage d'énergie (105) étant configurée pour loger un module de communication (103), et ledit un module de communication (103) recevant, par l'intermédiaire de la connexion de communication sans fil, des données échantillonnées envoyées par une pluralité de modules d'échantillonnage (102).
